# EUROPEAN PATENT SPECIFICATION

(11) **EP 2 584 323 B1**
(45) Date of publication and mention of the grant of the patent: **04.12.2013**
(21) Application number: 11400048.2
(22) Date of filing: 20.10.2011
(51) Int. Cl.: G01F 23/18, B64D 47/00

(54) **Monitoring device for lubricant quantities**
Überwachungsvorrichtung für Schmiermittelmengen
Dispositif de surveillance pour quantités de lubrifiant

(43) Date of publication of application: 24.04.2013
(73) Proprietor: Eurocopter Deutschland GmbH, 86609 Donauwörth (DE)
(72) Inventor: Lees, Thilo, 86660 Tapfheim (DE); Vogel, Dominik, 86641 Rain Am Lech (DE); Regenfelder, Florian, 80799 München (DE); Schida, Silvio, 99310 Wipfratal (DE)
(74) Representative: Schmid, Rudolf

(56) References cited:
- EP-A1- 1 103 795
- FR-A1- 2 700 001
- JP-A- 61 149 611
- KR-A- 20030 092 603
- US-A- 3 545 880
- US-A1- 2009 082 977

## Description

The invention relates to a rotor with a monitoring device for lubricant quantities, particularly to a rotor with a monitoring device for lubricant quantities in a rotor head of a helicopter and more particularly to a rotor with a monitoring device for lubricant quantities in a rotor head of a tail rotor of a helicopter with the features of the preamble of claim 1.

Military or paramilitary aircrafts are concerned with long mission durations till up to 6 hours and even more in case of air refuelling. If the mission duration is beyond the allowable leakage rate with regard to lubrication of rotating parts there is concern that said rotating parts may be running dry. Any damages of rotating parts of an aircraft, such as a helicopter, e. g. due to military fire, may lead to lubricant losses not realized immediately by the crew. Precious time allowed by the dry running operation characteristics of the rotating parts of the helicopter to land and avoid a crash of the helicopter may be wasted due to said lack of awareness. Sufficient presence of lubricant and positive knowledge of said presence by the crew are crucial for the operability and the safety of any aircraft.

The document EP 1 643 088 discloses a device and a method for lubricating a running surface of a cylinder wall of a cylinder of a lifting piston engine. A lubricant nozzle uses a control device containing a regulating unit in such a way that a condition parameter of the lubricant film is optimized on the running surface of the cylinder wall. The condition parameter is preferably the thickness of the lubricant film. A sensor is arranged in the piston, in the piston ring, in the cylinder wall, in the cylinder cover and/or in the component lying next to the cylinder. The sensor may be capacitive, inductive or ohmic resistive and communicates its data by means of an electric signal to assessment means.

The document WO 2008052890 A2 discloses a mechanical device with a base body and a shaft which is mounted in a lubricated bearing so as to be movable relative to the base body. Arranged on or in the base body is a lubricant sensor which is arranged to be in contact with the lubricant. At least one first electric variable, which is characteristic of a first lubricant-quantity-independent property of the lubricant, can be determined by the lubricant sensor. The lubricant sensor can output at least one first signal which is dependent on the first electric variable. Said output to a person may be contactless. A supplemental sensor may detect parameters responsive of the lubricant quantity inside the bearing, such as an oil-level. The lubricant sensor and/or supplemental sensor are technical complex and relatively expensive to implement.

The document US 2009 008 29 77 A1 discloses a controller for a pumping installation using a combined pressure sensor and fluid level sensor arrangement. The controller includes a processor responsive to measurements from the sensor arrangement, as well as memory for storing a set of instructions for execution by the processor to correlate initial measurements taken by the sensors. The instructions allows the controller to monitor a fluid level in a well with the combined arrangement to compile a history of respective measurements for both sensors, and, in the event of an unexpected discrepancy between the measurements, to automatically calibrate the sensor arrangement according to the history of respective measurements to re-establish a correlation between the sensors.

The document US 3 545 880 A discloses a rotor with a monitoring device for lubricant quantities, a casing to preserve the lubricant quantities for monitoring and a shaft mounted coaxially relative to said casing to rotationally drive the casing. Bearing are mounted from outside to the casing and/or shaft.

It is an object of the invention to provide a rotor with a monitoring device for lubricant quantities, particularly a rotor with a monitoring device of a helicopter, allowing continuous detection of lubricant quantities at rotating parts.

The invention is solved with a rotor with a monitoring device for lubricant quantities, particularly a rotor with a monitoring device for lubricant quantities in a rotor head of a helicopter and more particularly a rotor with a monitoring device for lubricant quantities in a rotor head of a tail rotor of a helicopter with the features of claim 1.

According to the invention a rotor with a monitoring device for lubricant quantities, particularly a rotor with a monitoring device for lubricant quantities in a rotor head of a helicopter and more particularly a rotor with a monitoring device for lubricant quantities in a rotor head of a tail rotor of a helicopter, comprises a cylindrical casing to preserve the lubricant quantities for monitoring and a shaft mounted coaxially relative to said casing to rotationally drive the casing. At least one bearing is mounted from outside to the casing and/or shaft and said at least one bearing is connected to the casing for supply of lubricant. Sensor means are provided to detect the lubricant quantities inside said casing and interface means are provided for communication of the data resulting from said detection, said interface means linking said sensor means to at least one display. The inventive monitoring device for lubricant quantities is adapted to use first of all the centrifugal forces acting on the lubricant, e. g. in a casing of a rotor head of a tail rotor of an operating helicopter to detect the lubricant quantities inside the casing by measuring the pressure of the lubricant by said sensor means. A decreasing level of lubricant is equivalent to decreasing centrifugal forces and therefore decreasing pressure of the lubricant detected by the sensor means. As the centrifugal forces are prevailing in a casing of a rotor head of a tail rotor of an operating helicopter to an extent that makes any other influences to the lubricant, such as gravity resulting from any manoeuvres relative to roll- and/or yaw axis, virtually negligible. Thus the inventive monitoring device allows reliable and continuous detection of data regarding lubricant quantities on the basis of said centrifugal forces, said data not being compromised by any manoeuvres of the helicopter. The inventive monitoring device allows by means of the interface means continuous presentation of the detected lubricant quantities e. g. in a rotor head of a tail rotor of an operating helicopter e. g. to pilots of said helicopter with the advantage that the pilots are able to react immediately to any losses of lubricant quantities through damages to the casing, e. g. caused by military fire, and land the helicopter before said losses can lead to a complete failure of the tail rotor and consequently to a crash of the helicopter. The lubricant rotating with the casing and the shaft of the rotor head at high rotational speeds between e. g. 800 rev/min - 1200 rev/min is evenly pressed against the inner circumference of the casing with a constant level, said level being representative of the lubricant quantities in the casing. The inventive monitoring device allows by simple and therefore reliable and economic means for example continuous surveillance of the lubricant quantities in the casing of the rotor head of the tail rotor of the operating helicopter and hence allows a possibly longer operation period for the helicopter taking advantage of the real time available lubricant quantities instead of supposed lubricant quantities according to a service schedule.

According to a preferred embodiment of the invention said sensor means are pressure responsive. The lubricant rotating with the casing and the shaft of the rotor head at high rotational speeds is evenly pressed against the inner circumference of the casing, the resulting even level along the inner circumference being representative of the lubricant quantities in the casing. A major advantage of pressure responsive sensor means is their commercial availability.

According to a further preferred embodiment of the invention said sensor means are arranged inside the casing, particularly in any supply orifices of said casing. A major advantage of sensor means arranged inside the casing is the close contact of the sensor means to the upper and lower limits for the allowed lubricant quantities in the casing. A further advantage of sensor means arranged inside the casing is a low imbalance due to reduced centrifugal forces as compared to an arrangement of said sensor means radial outside the casing e. g. in bearings mounted from outside to the casing.

According to a further preferred embodiment of the invention said pressure responsive sensor means are arranged in bearings of blade roots of a tail rotor of the helicopter. A major advantage of sensor means arranged in bearings of blade roots of a rotor is the close contact of the sensor means to the place where the lubricant is used.

According to a further preferred embodiment of the invention characterized in that said sensor means are capacitive or ohmic resistive. A major advantage of capacitive or ohmic resistive sensor means is little weight.

According to a further preferred embodiment of the invention said interface means comprises a RFID system, allowing wireless data transfer with a small emitter at the rotating casing and a receiver at a static structure, particularly a static structure of the helicopter. The RFID system allows supply of electricity to the rotating sensor means of the inventive monitoring device for operation of said rotating sensor means and for communication of data from said rotating sensor means without any need for complex rotary transmitters from a static structure to said rotating sensor means.

According to a further preferred embodiment of the invention said interface means comprises automatic emergency signalling features indicating to a crew that lubricant quantities in the casing are too low.

The invention is presented with reference to a preferred embodiment of the invention as outlined by means of the following description and the drawings.
Fig. 1 shows a schematic lateral view of a rotor head of a helicopter with a monitoring device according to the invention,
Fig. 2 shows a schematic lateral view of a rotor head of a helicopter with a monitoring device according to a preferred embodiment of the invention,
Fig. 3 shows a schematic lateral view of a rotor head of a helicopter with a monitoring device according to any of the preceding embodiment of the invention,
Fig. 4-6 show details of the monitoring device according to the preferred embodiment of the invention,
Fig. 7 shows a schematic overall view of a helicopter with a monitoring device according to any of the preceding embodiments of the invention, and
Fig. 8 shows a detail of the monitoring device according to any of the preceding embodiments of the invention.

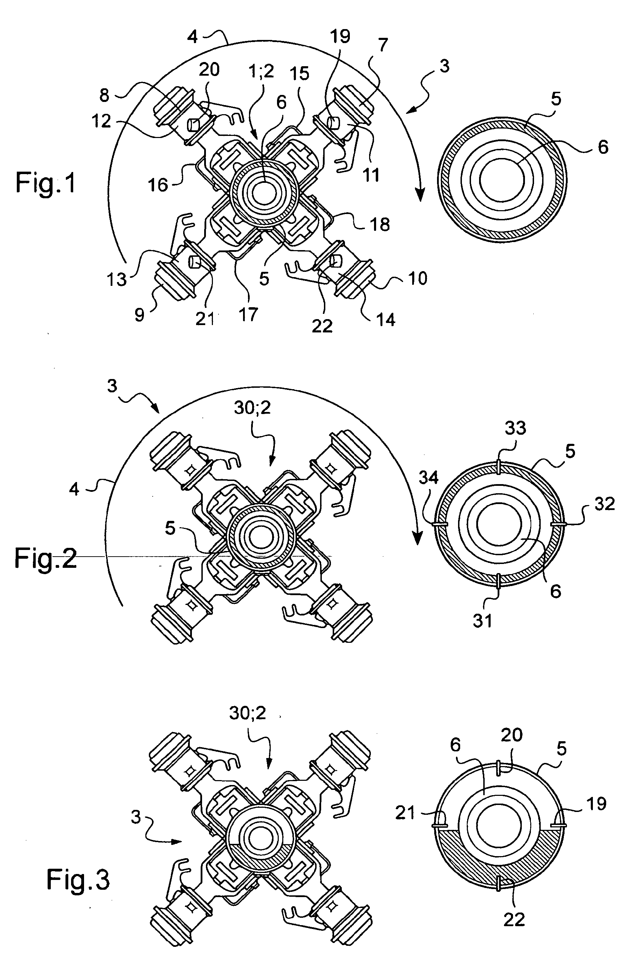

According to Fig. 1 a monitoring device 1 for lubricant quantities is integrated in a rotor head 2 of a tail rotor 3 of a helicopter (not shown). The rotational direction of the tail rotor 3 is indicated with the arrow 4.

A casing 5 is arranged coaxially around a shaft 6 mounted inside said casing 5 to rotationally drive the casing 6. The casing 5 contains lubricant quantities within upper and lower limits (not shown). Aside the casing 5 with the lubricant inside and the shaft 6 are represented at a larger scale.

Four rotor blades 7 - 10 are symmetrical with regard to the casing 5 and the shaft 6. Said four rotor blades 7 - 10 are mounted via four respective bearings 11-14 from outside to the casing 5. Each of said four respective bearings 11-14 are supplied with lubricant via supply lines 15-18 from inside the casing 5. The bearings 11-14 allow individual pivoting of the respective blade angles of any of the four rotor blades 7 - 10.

Sensor means 19-22 are provided in each of the bearings 11-14 of the four rotor blades 7 - 10 to detect the pressure of the lubricant, said pressure resulting from rotation of the operating tail rotor 3 at rotational speeds between e. g. 800 rev/min - 1200 rev/min. At said rotational speeds the lubricant quantity inside the casing 5 is distributed evenly along the inside circumference of casing 5 due to the centrifugal forces whereas gravity forces g to the lubricant inside the casing 5 can be neglected relative to said centrifugal forces of about 80g. The centrifugal forces, resulting from rotation of the operating tail rotor 3, urge evenly the lubricant to each of said four respective bearings 11-14 via the supply lines 15-18 from inside the casing 5.

With known rotational speed of the tail rotor 3, with known specific weight of the lubricant used and with known distance of the sensor means 19-22 from the centre of the tail rotor 3 data corresponding to the lubricant quantities inside said casing 5 can be calculated from the detected pressure. The pressures detected by more than one of the sensor means 19-22 are used for redundancy.

Interface means (not shown) communicate said data from said sensor means 19-22 to at least one display (not shown) in a cockpit of the helicopter.

According to Fig. 2, 3 corresponding features are referred to with the references of Fig. 1. A monitoring device 30 for lubricant quantities is integrated inside said casing 5 of rotor head 2 of the tail rotor 3. The rotational direction of the tail rotor 3 is indicated with the arrow 4. Aside the casing 5 of the electric monitoring device 30 with the lubricant inside and the shaft 6 are represented at a larger scale.

Electric sensor means 31-34 as capacitive sensors or four pressure responsive sensors 19-22 are mounted tightly to the inside circumference of the casing 5. The centrifugal forces, resulting from rotation of the operating tail rotor 3, urge evenly the lubricant towards each of said four capacitive sensors 31-34 or pressure responsive sensors 19-22 from inside the casing 5. Supply orifices (not shown) for the supply of lubricant into the casing 5 are used to mount the electric sensor means 31-34 or pressure responsive sensors 19-22.

The lubricant quantities inside said casing 5 of rotor head 2 are detected in case of a non rotating tail rotor 3 with four pressure responsive sensors 19-22 (Fig. 3). Knowing the angle position of the tail rotor 3 relative to the ground and knowing the positions of the four preferably equiangled pressure responsive sensors 19-22 at the inside circumference of the casing 5 allows calculation of the data corresponding to the lubricant quantities inside said casing 5 from the pressures detected at any of the pressure responsive sensors 19-22.

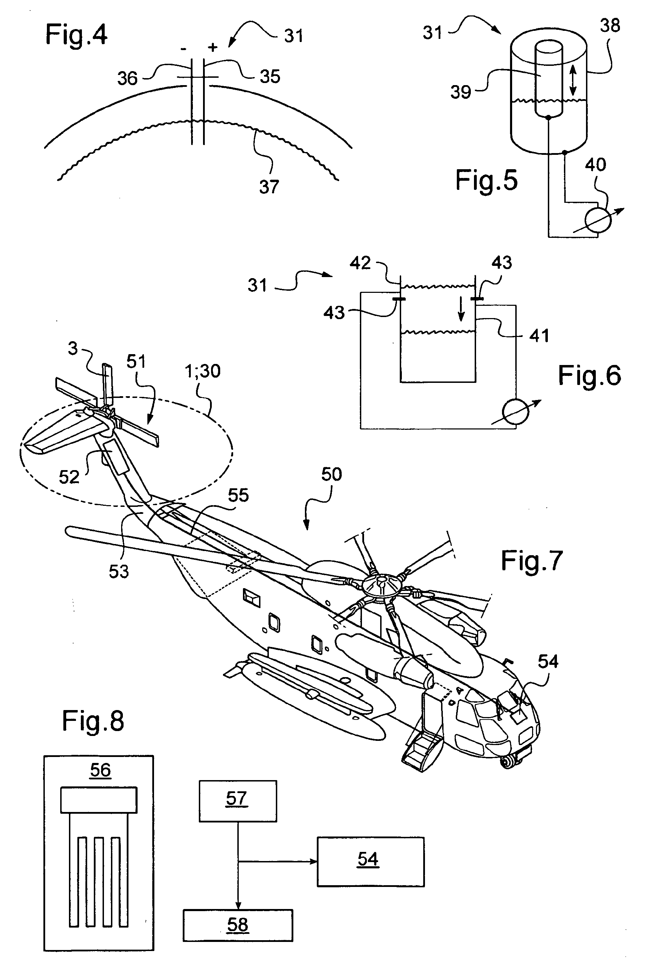

According to Fig. 4 one of the capacitive sensors 31-34 is shown in more detail. Said capacitive sensor 31 comprises two electrodes 35, 36 each made of a metal plate isolated towards the electrically conducting casing 5. The two electrodes 35, 36 are mounted without isolation, if the casing 5 is made of glass. The two electrodes 35, 36 are pointing radial inside the casing 5.

Voltage is applied to turn the electrodes 35, 36 to anode 35 and cathode 36. The lubricant quantities urged evenly by the high centrifugal forces of the operating tail rotor 3 into each of said capacitive sensors 31-34 from inside the casing 5 tune the electric current between anode 35 and cathode 36 and thus an electric signal corresponding to the share of the respective levels of lubricant and air/gas between the anode 35 and cathode 36 results due to the different dielectric coefficients for lubricant or air/gas. The level of lubricant between anode 35 and cathode 36 can be extracted from said electric signal and thus the overall lubricant quantities inside the casing 5. Any zig-zag at the surface 37 of the lubricant due to vibrations at the tail rotor 3 is evened out by appropriate characteristics of the electric sensor means 31-34.

According to Fig. 5 one of the capacitive sensors 31-34 is set up by a hollow cylindrical body 38 as one electrode, which is open towards the lubricant inside the casing 5. The hollow cylindrical body 38 is mounted to the inside of the casing 5. A coaxial inner floater 39 as a further electrode is electrically isolated inside the hollow cylindrical body 38. The centrifugal forces, resulting from rotation of the operating tail rotor 3, urge the lubricant into the hollow cylindrical body 38 pointing with its opening radial inside the casing 5.

Voltage is applied to turn the electrodes 38, 39 to anode 38 and cathode 39 or vice versa. The resulting current between anode 38 and cathode 39 depends from the share of the respective levels of lubricant and air/gas inside the hollow cylindrical body 38, i. e. the resulting current depends from the level of lubricant inside the hollow cylindrical body 38. Said resulting current is measured by measuring means 40 between anode 38 and cathode 39 and interface means communicate said data representing the level of lubricant inside the casing 5 from said sensor means 31-34 to at least one display.

According to Fig. 6 one of the electric sensor means 31-34 inside the casing 5 is conceived as ohmic resistive. Said ohmic resistive sensor 31 comprises two cylindrical electrodes 41, 42 isolated from each other by means of a gap 43 and isolated towards the electrically conducting casing 5. Cylindrical electrode 41 extends radially inside of cylindrical electrode 42. Tension is applied between the two cylindrical electrodes 41, 42.

As long as there is enough lubricant inside the casing 5 that the level of the lubricant at the ohmic resistive sensor 31 is high enough to cover both of the two cylindrical electrodes 41, 42 there is a current flowing between the two cylindrical electrodes 41, 42 through the electrically conductive lubricant. If due to the consumption of lubricant in one or any of the bearings 11-14 the level of the lubricant inside the casing 5 falls below a level at which the lubricant does not cover anymore the gap 43 between the two cylindrical electrodes 41, 42 a signal of digital type is given to the measuring means 40 between the two cylindrical electrodes 41, 42 for further communication to the at least one display that the level of lubricant inside the casing 5 has fallen below a predetermined level.

According to Fig. 7, 8 corresponding features are referred to with the references of Fig. 1-6. A monitoring device 1, 30 for lubricant quantities is mounted to a tail rotor 3 of a helicopter 50. A secondary side 51 of the interface means of the monitoring device 1, 30 is integral with a rotating part of the tail rotor 3 and a primary side 52 of the interface means is mounted to a static tail structure 53 of the helicopter 50. Communication of data from said sensor means 19-22, 31-34 is wireless between said secondary side 51 and the primary side 52 of the interface means, whereas communication of data from said primary side 52 to a display 54 is bound to a grid 55.

Communication of data is accomplished by applying radio-frequency-identification (RFID) 56 between said secondary side 51 and the primary side 52 of the interface means with a small emitter fixed to the rotating part of the tail rotor 3 and a small receiver fixed to the static tail structure 53 of the helicopter 50. The receiver comprises an antenna and an evaluation unit 57. The evaluation unit 57 assesses any information or dysfunction and communicates in an appropriate way, namely by acoustic and/or optical means, any of said information or dysfunction to the display 54. An alarm may be sent automatically by an emergency emitter 58.

### References

- 1: monitoring device
- 2: rotor head
- 3: tail rotor
- 4: rotational direction
- 5: casing
- 6: shaft
- 7 - 10: rotor blades
- 11 - 14: bearings
- 15 - 18: supply lines
- 19 - 22: sensor means
- 30: electric monitoring device
- 31-34: electric sensor means
- 35, 36: electrodes
- 37: surface of the lubricant
- 38: cylindrical body, anode
- 39: cathode
- 40: measuring means
- 41, 42: cylindrical electrodes
- 43: gap
- 50: helicopter
- 51: secondary side
- 52: primary side
- 563: static tail structure
- 54: display 54
- 55: grid
- 56: radio-frequency-identification (RFID)
- 57: evaluation unit
- 58: emergency emitter

## Claims

1. A rotor with a monitoring device (1, 30) for lubricant quantities, particularly a rotor with a monitoring device (1, 30) for lubricant quantities in a rotor head (2) of a helicopter (50) and more particularly a rotor with a monitoring device (1, 30) for lubricant quantities in a rotor head (2) of a tail rotor (3) of a helicopter (50), comprising
- a cylindrical casing (5) to preserve the lubricant quantities for monitoring,
- a shaft (6) mounted inside said casing to rotationally drive the casing (5), and
- at least one bearing (11-14), said at least one bearing (11-14) being mounted from outside to the casing (5) and/or shaft (6), wherein said at least one bearing (11-14) is connected to the casing (5) for being supplied with lubricant,
**characterized in that** it further comprises
- sensor means (19-22, 31-34) to detect the lubricant quantities inside said casing (5) during rotation of the casing when centrifugal forces maintain the lubricant at the outer circumference of the casing, and,
- interface means for communication of data from said sensor means (19-22, 31-34) to at least one display (54).

2. The monitoring device (1, 30) according to claim 1,
**characterized in that** said sensor means (19-22) are pressure responsive.

3. The monitoring device (1, 30) according to claim 1,
**characterized in that** said sensor means (19-22, 31-34) are arranged inside the casing (5), particularly in a supply orifice of said casing (5).

4. A helicopter rotor with a monitoring device (1, 30) according to claim 2,
**characterized in that** said pressure responsive sensor means (19-22) are arranged in bearings (11-14) of blade roots of a rotor, namely of a tail rotor (3) of the helicopter (50).

5. The monitoring device (1, 30) according to claim 3,
**characterized in that** said sensor means (31-34) are capacitive or ohmic resistive.

6. The monitoring device (1, 30) according to claim 1,
**characterized in that** said interface means comprises a RFID system (56).

7. The monitoring device (1, 30) according to claim 1,
**characterized in that** said interface means comprises automatic emergency signalling features (58).

## Patentansprüche

1. Ein Rotor mit einer Überwachungsvorrichtung (1, 30) für Schmierstoffmengen, insbesondere ein Rotor mit einer Überwachungsvorrichtung (1, 30) für Schmierstoffmengen in einem Rotorkopf (2) eines Helikopters (50) und wiederum insbesondere ein Rotor mit einer Überwachungsvorrichtung (1, 30) für Schmierstoffmengen in einem Rotorkopf (2) eines Heckrotors (3) eines Helikopters (50), mit
- einem zylindrischen Gehäuse (5) zur Aufbewahrung der Schmierstoffmengen zur Überwachung,
- einer Welle (6), die im Inneren des besagten Gehäuses montiert ist, um das Gehäuse (5) in Drehrichtung anzutreiben, und
- mindestens einem Lager (11-14), wobei besagtes Lager (11-14) von außen an dem Gehäuse (5) und/oder der Welle (6) angebracht ist, wobei besagtes mindestens eine Lager (11-14) mit dem Gehäuse (5) verbunden ist, um mit Schmierstoff versorgt zu werden,
**dadurch gekennzeichnet, dass** weiter vorgesehen sind
- Sensormittel (19-22, 31-34) zur Ermittlung der Schmierstoffmengen in besagtem Gehäuse (5) während der Rotation des Gehäuses, wenn Zentrifugalkräfte den Schmierstoff am äußeren Umfang des Gehäuses halten, und,
- Schnittstellenmittel zur Kommunikation der Daten von besagten Sensormitteln (19-22, 31-34) zu mindestens einem Display (54).

2. Die Überwachungsvorrichtung (1,30) gemäß Anspruch 1,
**dadurch gekennzeichnet, dass** besagte Sensormittel (19-22) auf Druck reagieren.

3. Die Überwachungsvorrichtung (1,30) gemäß Anspruch 1,
**dadurch gekennzeichnet, dass** besagte Sensormittel (19-22, 31-34) im Gehäuse (5) angeordnet sind, insbesondere in einer Zufuhröffnung des besagten Gehäuses (5).

4. Ein Helikopterrotor mit einer Übervvachungsvorrichtung (1, 30) gemäß Anspruch 2,
**dadurch gekennzeichnet dass** besagte auf Druck reagierende Sensormittel (19-22) in Lagern (11-14) der Blattwurzeln eines Rotors, insbesondere eines Heckrotors (3) des Helikopters (50) angebracht sind.

5. Die Überwachungsvorrichtung (1,30) gemäß Anspruch 1,
**dadurch gekennzeichnet, dass** besagte Sensormittel (31-34) kapazitiv oder Ohmsche Widerstände sind.

6. Die Überwachungsvorrichtung (1,30) gemäß Anspruch 1,
**dadurch gekennzeichnet, dass** besagte Schnittstellenmittel ein RFID-System (56) beinhalten.

7. Die Überwachungsvorrichtung (1,30) gemäß Anspruch 1,
**dadurch gekennzeichnet, dass** besagte Schnittstellenmittel automatische Notfallsignalfunktionen (58) beinhalten.

## Revendications

1. Rotor doté d'un dispositif de surveillance (1, 30) des quantités de lubrifiant, en particulier rotor doté d'un dispositif de surveillance (1, 30) de quantités de lubrifiant dans une tête de rotor (2) d'un hélicoptère (50) et plus particulièrement un rotor doté d'un dispositif de surveillance (1, 30) de quantités de lubrifiant dans une tête de rotor (2) d'un rotor de queue (3) d'un hélicoptère (50), comprenant
- un carter cylindrique (5) destiné à préserver les quantités de lubrifiant pour la surveillance,
- un arbre (6) monté à l'intérieur du dit carter pour entraîner en rotation le carter (5), et
- au moins un palier (11-14), ledit au moins un palier (11-14) étant monté de l'extérieur sur le carter (5) et/ou l'arbre (6), moyennant quoi ledit au moins un palier (11-14) est connecté au carter (5) pour être alimenté en lubrifiant,
**caractérisé en ce qu'**il comprend en plus
- des moyens de capteur (19-22, 31-34) permettant de détecter les quantités de lubrifiant à l'intérieur du dit carter (5) durant la rotation du carter lorsque des forces centrifuges maintiennent le lubrifiant à la circonférence extérieure du carter, et,
- un moyen d'interface permettant une communication des données des dits moyens de capteur (19-22, 31-34) vers au moins un écran (54).

2. Dispositif de surveillance (1, 30) selon la revendication 1,
**caractérisé en ce que** lesdits moyens de capteur (19-22) sont sensibles à la pression.

3. Dispositif de surveillance (1, 30) selon la revendication 1,
**caractérisé en ce que** lesdits moyens de capteur (19-22, 31-34) sont disposés à l'intérieur du carter (5), notamment dans un orifice d'alimentation du dit carter (5).

4. Rotor d'hélicoptère doté d'un dispositif de surveillance (1,30) selon la revendication 2,
**caractérisé en ce que** lesdits moyens de capteur sensibles à la pression (19-22) sont disposés dans des paliers (11-14) de bases de pale d'un rotor, en l'espèce d'un rotor de queue (3) d'un hélicoptère (50).

5. Dispositif de surveillance (1, 30) selon la revendication 3,
**caractérisé en ce que** les dits moyens de capteur (31-34) sont des moyens de capteur capacitif ou de résistivité ohmique.

6. Dispositif de surveillance (1, 30) selon la revendication 1,
**caractérisé en ce que** ledit moyen d'interface comprend un système RFID (56).

7. Dispositif de surveillance (1, 30) selon la revendication 1,
**caractérisé en ce que** ledit moyen d'interface comprend des instruments automatiques de signalisation d'urgence (58).
